# EUROPÄISCHE PATENTSCHRIFT

(11) **EP 3 895 291 B1**
(45) Veröffentlichungstag und Bekanntmachung des Hinweises auf die Patenterteilung: **10.04.2024**
(21) Anmeldenummer: 19824269.5
(22) Anmeldetag: 11.12.2019
(51) Int. Cl.: G01K 1/14, H02K 11/25, H02K 3/38, H02K 3/50

(54) **STATOR UND ELEKTRISCHE MASCHINE**
STATOR AND ELECTRIC MACHINE
STATOR ET MACHINE ÉLECTRIQUE

(30) Priorität: 12.12.2018 DE 102018131973
(43) Veröffentlichungstag der Anmeldung: 20.10.2021
(73) Patentinhaber: Jheeco E-Drive AG, 9492 Eschen (LI)
(72) Erfinder: STÖCK, Martin, 9465 Salez (CH); PÁDÁR, Pèter, 1031 Budapest (HU)
(74) Vertreter: Grünecker Patent- und Rechtsanwälte PartG mbB
(86) Internationale Anmeldenummer: PCT/EP2019/084750
(87) Internationale Veröffentlichungsnummer: WO 2020/120624

(56) Entgegenhaltungen:
- EP-A1- 1 727 261
- EP-A1- 3 252 447
- JP-A- 2015 053 814

## Beschreibung

Die Erfindung betrifft einen Stator und eine elektrische Maschine.

Aus CN 205792061 U ist eine elektrische Verbindungskomponente für einen Start/Stopp-Generator bekannt, die eine Temperaturmesskomponente mit einem Temperatursensor umfasst. Der Temperatursensor ist in einer Bohrung angeordnet, die sich in die Temperaturmesskomponente erstreckt und unlösbar in der Bohrung angeordnet sowie thermisch leitfähig mit der Lochwand der Bohrung verbunden ist.

Der effektiv leitende Stromleiterquerschnitt ist durch die Bohrung verkleinert.

Dadurch ist der elektrische Widerstand im Bereich der Temperaturmessung erhöht. Dies führt zu einer lokal höheren Temperatur als im restlichen Leiter, was eine Verfälschung der gemessenen Temperaturwerte zur Folge hat.

In WO 2017/118786 ist ein Stator mit einer Hairpin-Wicklung beschrieben. Die Wicklung weist neutrale Punkte auf. Der Stator umfasst einen Verbinder, der die neutralen Punkte der Wicklung miteinander verbindet. Der Verbinder ist auf einem stirnseitigen Endbereich der Wicklung angeordnet. An dem Verbinder ist ein Temperatursensor zur Messung und Regulierung der Statortemperatur angeordnet.

Der Sensor hat keinen direkten Kontakt mit der Wicklung, sondern ist an dem Verbinder angeordnet. Die Wärme der Wicklung muss zuerst auf den Verbinder übertragen werden. Das bedingt eine längere Ansprechzeit des Sensors. Da der Sensor auf dem Verbinder positioniert ist, ist es nicht möglich, die Temperatur einer Phase an unterschiedlichen Stellen zu messen.

JP 2012-175816 A beschreibt einen Temperatursensor für einen E-Motor mit einem ölgekühlten Wickelkopf. Der Temperatursensor ist zum Schutz vor dem Öl in einem Gehäuse angeordnet und so von der äußeren Umgebung abgekapselt. JP 2015 053814 offenbart einen Temperatursensor, der in einem Stator montiert ist. Der Temperatursensor wird durch einen Halter gegen einen Verdrahtungssteg einer Spule gedrückt gehalten.

Bei diesem Temperatursensor ist keine Kontaktfläche mit einem stromdurchflossenen Leiter mit definierter Flächenpressung beschrieben. Der Wärmeübergang und somit die Messwerte hängen jedoch stark von der Flächenpressung ab. Daher können unterschiedliche bzw. zufällige Anpresskräfte zu stark divergierenden Messergebnissen bei E-Motoren gleicher Bauart führen.

Der Erfindung liegt daher die Aufgabe zu Grunde, einen Stator anzugeben, an den ein Temperatursensors derart angeordnet ist, dass eine genaue, zeitnahe Temperaturmessung möglich ist. Ferner liegt der Erfindung die Aufgabe zu Grunde, eine elektrische Maschine anzugeben.

Erfindungsgemäß wird die Aufgabe mit Blick auf den Stator durch den Gegenstand des Anspruchs 1 und die elektrische Maschine durch den Gegenstand des Anspruchs 13 gelöst.

Konkret wird die Aufgabe durch einen im Anspruch 1 definierten Stator gelöst.

Der Temperatursensor ist an einem Verschaltungssteg, insbesondere einen Verschaltungssteg aus Kupfer, einer zusammengesetzten Wicklung angeordnet und mit einer definierten Anpress- und/oder Klemmkraft an den Verschaltungssteg angepresst. Die Flächenpressung ermöglicht einen besseren Wärmeübergang auf den Temperatursensor.

Durch die definierte bzw. voreingestellte Anpresskraft, ist zum einen eine genauere Temperaturmessung möglich und zum andern werden so divergierende Messergebnisse bei E-Motoren gleicher Bauart vermieden. Des Weiteren ist durch die Anordnung des Sensors direkt am Leiter eine kürzere Ansprechzeit als bei anderen Messmethoden möglich. Durch die geringeren Messungenauigkeiten und kürzere Ansprechzeit ist es möglich, E-Motoren näher am Temperaturlimit zu betreiben.

Bevorzugt Ausführungsformen der Erfindung sind in den Unteransprüchen angegeben.

Erfindungsgemäß ist das Halteelement im Querschnitt U-förmig mit einem Boden, einer ersten Seitenwand und einer zweiten Seitenwand ausgebildet, zwischen denen der Verschaltungssteg und der Temperatursensor angeordnet sind. Dadurch ist eine Anordnung des Temperatursensors direkt an einem Verschaltungssteg möglich. Das Halteelement ist vorzugsweise in der Isolationsscheibe integriert bzw. einstückig als Teil der Isolationsscheibe ausgeführt.

Erfindungsgemäß ist der Verschaltungssteg direkt oder indirekt an der ersten Seitenwand und der Temperatursensor direkt oder indirekt an der zweiten Seitenwand abgestützt. Das ist vorteilhaft für eine enge und flächige Anordnung des Temperatursensors an dem Verschaltungssteg.

Es ist vorteilhaft, wenn der Boden oder eine Seitenwand einen Abstandshalter für den Temperatursensor aufweist. Dadurch werden störende Temperatureinflüsse verringert und so die Genauigkeit der Temperaturmessung erhöht.

Vorteilhafterweise ist die zweite Seitenwand und/oder der Verschaltungssteg elastisch verformbar. Dadurch ist es möglich, den Temperatursensor und den Verschaltungssteg in dem Halteelement durch Festklemmen zu halten bzw. zu befestigen. Dazu ist es vorteilhaft, wenn der Verschaltungssteg als Federelement, insbesondere als V-förmiges Federelement, ausgebildet ist. Andere Arten von Federn sind denkbar. Insbesondere kann auch eine Biegespannung durch Verbiegen des Verschaltungssteges entlang seiner Längsachse zum Aufbringen einer Federkraft genutzt werden. Alternativ kann die zweite Seitenwand vor dem Einbau des Temperatursensors eine Neigung in Richtung der ersten Seitenwand aufweisen. Im eingebauten Zustand drückt der Temperatursensor die zweite Seitenwand nach außen, die dadurch eine annähernd rechtwinklige Position einnimmt. Die zweite Seitenwand strebt in ihre geneigte Stellung zurück und übt dadurch eine Rückstellkraft auf den Temperatursensor aus, die den Temperatursensor gegen die Anlagefläche des Verschaltungsstegs presst.

Weiter vorteilhafterweise ist der Abstand im Querschnitt des Halteelements zwischen der zweiten Seitenwand und dem Verschaltungssteg vor dem Einbau des Temperatursensors kleiner als die Breite des Temperatursensors. Das ist vorteilhaft für die Haftung bzw. die Klemmkraft zwischen dem Verschaltungssteg und dem Temperatursensor.

Die zweite Seitenwand weist vorteilhafterweise ein Rückhalteprofil auf, das den Temperatursensor im Haltekörper hält. Das Rückhalteprofil ist bspw. als in Richtung des Bodens des Halteelements ausgerichtete Fortsätze ausgebildet. Die Fortsätze stehen in einem spitzen Winkel von der zweiten Seitenwand ab, wobei der Winkel in Richtung des Bodens geöffnet ist. Das Rückhalteprofil presst bzw. drückt zum einen den Temperatursensor gegen den Verschaltungssteg und verhindert zum anderen eine Bewegung in Richtung der offenen Seite des Halteelements. So ist der Temperatursensor gegen das Verrutschen durch Stöße oder Vibrationen gesichert. Der Temperatursensor kann ein Rückhalteprofil aufweisen.

In einer vorteilhaften Ausführungsform ist wenigstens eine Feder zwischen der zweiten Seitenwand und dem Temperatursensor angeordnet, die den Temperatursensor gegen den Verschaltungssteg presst. Die Feder ist bspw. V-förmig ausgebildet. Andere Arten von Federn oder Feder-Geometrien sind denkbar. Die Anpresskraft ist durch Variieren der Federkonstante der eingesetzten Feder anpassbar.

Vorteilhafterweise ist wenigstens ein bewegliches Anpresselement in der zweiten Seitenwand integriert, das mit einer Kraft in Richtung des Temperatursensors beaufschlagt ist. Dadurch ist ein Zusammenbau ohne zusätzliche Befestigungselemente möglich.

Ferner kann der Verschaltungssteg fluidgekühlt, insbesondere von Öl umflossen, sein. Durch die definierte Anpresskraft und Anlagefläche fließt kein bzw. kaum Kühlfluid zwischen Verschaltungssteg und Temperatursensor. Eine Verzerrung der Temperaturmessung kann dadurch vermieden werden. Vorteilhaft ist das Haltelement dabei über die Länge der Anlagefläche im Querschnitt so angepasst, dass eine im Vergleich mit eine davor oder dahinter liegenden Abschnitt des fluidgekühlten Verschaltungssteges ein konstanter Fluidstrom aufrechterhalten werden kann.In einer weiteren Ausführungsform ist die zweite Seitenwand keilförmig ausgebildet. Dabei ist es vorteilhaft, wenn die zweite Seitenwand direkt am Temperatursensor anliegt. Alternativ ist es vorteilhaft, wenn ein Anpresskeil zwischen der zweiten Seitenwand und dem Temperatursensor angeordnet ist. Durch die Keilform ist in beiden Fällen der Temperatursensor kraftschlüssig zwischen dem Verschaltungssteg und der zweiten Seitenwand gehalten.

Im Rahmen der Erfindung wird ferner eine elektrische Maschine offenbart und beansprucht.

Die Erfindung wird anhand mehrerer Ausführungsbeispiele unter Bezug auf die beigefügten schematischen Zeichnungen mit weiteren Einzelheiten erläutert.

Dabei zeigen:
- Fig. 1: eine perspektivische Darstellung eines erfindungsgemäßen Ausführungsbeispiels eines Stators
- Fig. 2: eine perspektivische Darstellung eines erfindungsgemäßen Ausführungsbeispiels einer Verschaltungsebene mit Temperatursensor
- Fig. 3: eine Draufsicht eines erfindungsgemäßen Ausführungsbeispiels einer Anordnung eines Temperatursensors in einer Verschaltungsebene
- Fig. 3a: eine Detailansicht der Anordnung des Temperatursensors aus Fig. 3
- Fig. 4: eine perspektivische Ansicht eines Temperatursensors im montierten Zustand
- Fig. 5: einen Querschnitt eines erfindungsgemäßen Ausführungsbeispiels eines Halteelements mit einer elastisch verformbaren zweiten Seitenwand
- Fig. 6: einen Querschnitt eines erfindungsgemäßen Ausführungsbeispiels eines Halteelements mit einem Rückhalteprofil
- Fig. 7: einen Querschnitt eines erfindungsgemäßen Ausführungsbeispiels eines Halteelements mit einer Feder
- Fig. 8: einen Querschnitt eines erfindungsgemäßen Ausführungsbeispiels eines Halteelements mit einem elastisch verformbaren Verschaltungssteg
- Fig. 9: einen Querschnitt eines erfindungsgemäßen Ausführungsbeispiels eines Halteelements mit einer keilförmigen zweiten Seitenwand.
- Fig. 10: einen Querschnitt eines erfindungsgemäßen Ausführungsbeispiels eines Halteelements mit einem in der zweiten Seitenwand integrierten Anpresselement
- Fig. 11a-b: eine Draufsicht eines erfindungsgemäßen Ausführungsbeispiels eines Halteelements mit federnder Seitenwand
- Fig. 12: eine Draufsicht eines erfindungsgemäßen Ausführungsbeispiels eines Halteelements mit federnder Seitenwand
- Fig. 13: eine Draufsicht eines erfindungsgemäßen Ausführungsbeispiels eines Halteelements mit federnder Seitenwand
- Fig. 14: eine Draufsicht eines erfindungsgemäßen Ausführungsbeispiels eines Halteelements mit federnder Seitenwand und eingeclipstem Temperatursensor
- Fig. 15: eine Draufsicht eines erfindungsgemäßen Ausführungsbeispiels eines Halteelements mit federnder Seitenwand mit Abstandshaltern
- Fig. 16: eine Draufsicht eines erfindungsgemäßen Ausführungsbeispiels eines Halteelements mit keilförmigem Temperatursensor
- Fig. 16a: einen Teilausschnitt aus Fig. 16 mit einem sägezahnartigen Rückhalteprofil in Temperatursensor und Verschaltungssteg

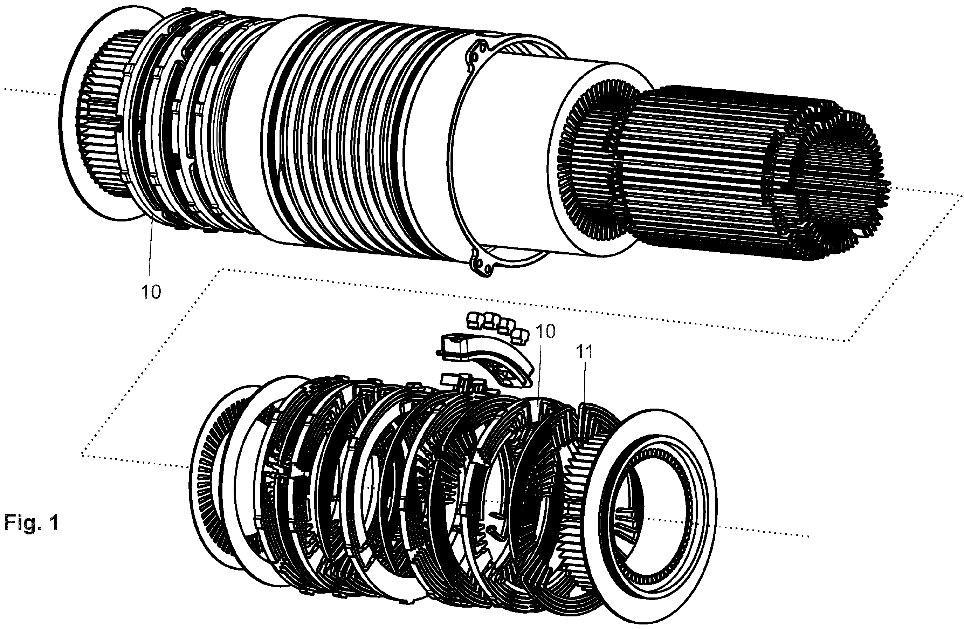

Fig. 1 zeigt ein erfindungsgemäßes Ausführungsbeispiel eines Stators mit einem Temperatursensor (nicht dargestellt). Der gezeigte Stator ist zur Erzeugung eines magnetischen Drehfelds gleichermaßen für Asynchronmaschinen als auch für Synchronmaschinen geeignet. Der Stator umfasst einen Isolatorkranz, ein Statorblechpaket, eine zusammengesetzte Wicklung mit Stableitern, ein Gehäuse und zwei Wickelköpfe, wobei je ein Wickelkopf an einem axialen Ende des Stators angeordnet ist. Als Wickelkopf wird der axial über den Stator hinausragende Bereich bezeichnet.

Der in Fig. 1 dargestellte Wickelkopf umfasst Stableiter, Verschaltungsstege 11, Isolationsscheiben 10, einen Temperatursensor 12 (nicht dargestellt), eine Dichtmatte und einen Isolatorkranz.

Unter Stableitern sind insbesondere Hairpins und I-Pins zu verstehen. Stableiter können einteilig als Massivleiter oder mehrteilig, insbesondere als formverpresste Drahtlitzen, ausgebildet sein. Die Stableiter können unmittelbar (aufeinander zugebogen und verschweißt) oder mittelbar (über Stirnverbinder/Verschaltungsstege) verbunden oder verbindbar sein.

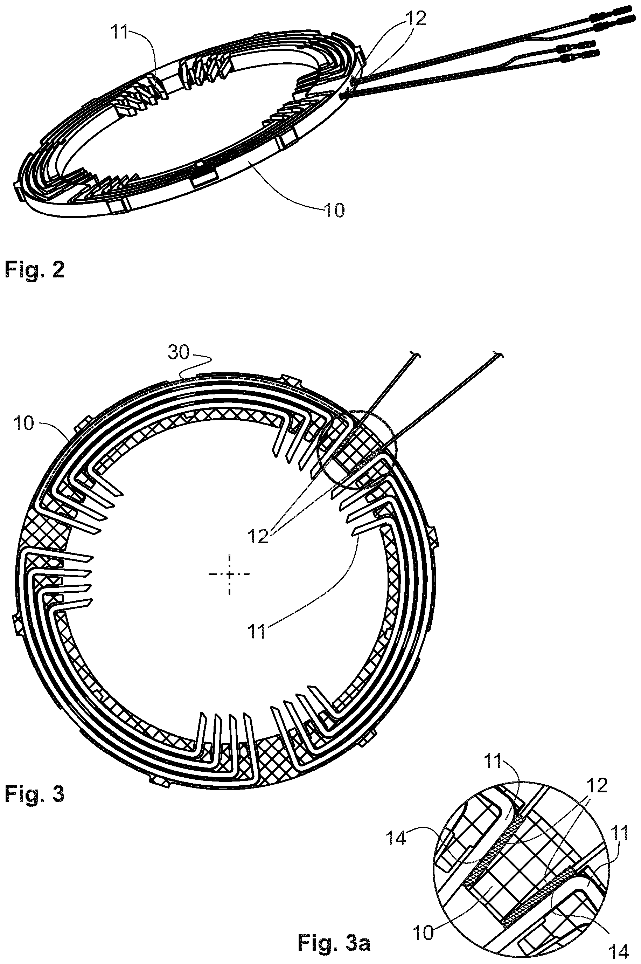

In Figur 2 ist eine beispielhafte Anordnung von zwei Temperatursensoren 12 in einer Verschaltungsebene dargestellt. Die Verschaltungsebene umfasst eine als Ringscheibe ausgebildete Isolationsscheibe 10 und C-förmige Verschaltungsstege 11 aus Kupfer.

Die Verschaltungsstege 11 sind in korrespondierende Aussparungen in der Isolationsscheibe 10 angeordnet. Die Verschaltungsstege 11 verlaufen zum Teil parallel zum Umfang der Isolationsscheibe 10, wobei die Endbereiche sich jeweils radial nach innen erstrecken. Die Verschaltungsstege können entlang ihrer Längsachse 30 verspannt in die Aussparungen der Isolationsscheibe eingesetzt sein.

Fig. 3 zeigt eine Draufsicht der in Fig. 2 beschriebenen Verschaltungsebene. Die Temperatursensoren 12 sind an den radial äußersten Verschaltungsstegen 11 zweier benachbarter Wicklungen angeordnet. Dabei sind die Temperatursensoren 12 jeweils an einem der radial nach innen gerichteten Bereiche der Verschaltungsstege 11 angeordnet.

Fig. 3a ist eine Detailansicht eines Bereichs aus Fig. 3. Die Detailansicht betrifft die Anordnung der Temperatursensoren 12. Die Temperatursensoren 12 sind zusammen mit den Verschaltungsstegen 11 in einem Halteelement 13, d.h. einer Aussparung in der Isolationsscheibe 10, angeordnet. Diese Anordnung ist wegen der vorliegenden Zugänglichkeit von radial außen geeignet, wenn beispielsweise eine axiale Zugänglichkeit für eine Montage nicht gegeben ist. Die Temperatursensoren 12 können zur Montage von axial oben eingesetzt werden.

Die Temperatursensoren 12 können jedoch auch von radial außen eingesetzt oder eingeschoben sein. Eine andere Position des Sensors entlang eines Verschaltungssteges 11 ist denkbar. Es sind verschiedene Typen und Formen für die Temperatursensoren denkbar. Es sind Thermoelemente sowie PTC- und NTC-Thermistoren denkbar. Die Temperatursensoren können flach, kreisförmig oder zylindrisch gestaltet sein. Die Verschaltungsstege 11 weisen jeweils eine Anlagefläche 14 auf, an denen die Temperatursensoren 12 angepresst sind. Als Anlageflächen 14 sind Seitenflächen der Verschaltungsstege 11 gewählt. Eine andere Anlagefläche 14, beispielsweise eine Oberseite oder Unterseite wäre gleichfalls denkbar. Die Temperatursensoren 12 sind mit Sensorkabeln verbunden. Die Sensorkabel erstrecken sich radial nach außen durch eine Öffnung auf der Außenfläche der Isolationsscheibe 10.Der oben beschriebene Aufbau ermöglicht eine Anordnung des Temperatursensors 12 direkt bzw. unmittelbar an einem Verschaltungssteg 11, d.h. der Temperatursensor steht mit dem Verschaltungssteg 11 in Kontakt. Das erhöht die Genauigkeit der Messwerte und verringert zugleich die Ansprechzeit des Temperatursensors. Da das Halteelement 13 in die Isolationsscheibe 10 integriert ist, sind nur wenige bis gar keine zusätzlichen Bauteile für den Einbau nötig.

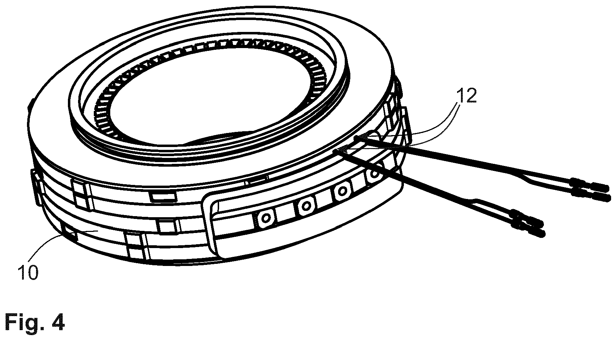

Fig. 4 zeigt die Verschaltungsebene gemäß Fig. 3 im montierten Zustand. Die dargestellt Baugruppe umfasst den Isolatorkranz, fünf gestapelte Isolationsscheiben 10, Verschaltungsstege 11 und die Temperatursensoren 12. Die Position der Temperatursensoren 12 ist an den Sensorkabeln erkennbar.

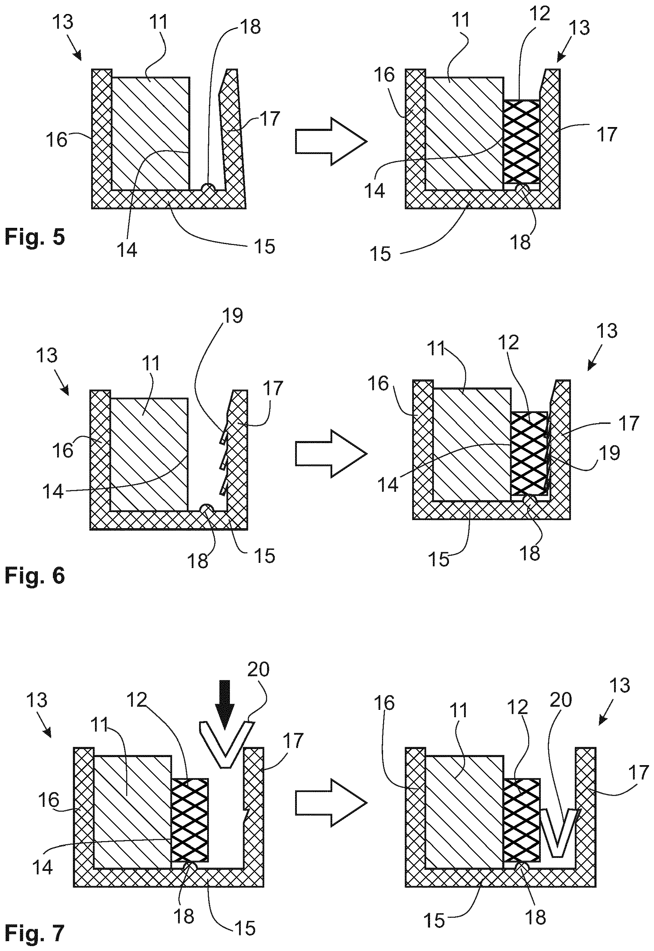

In den Figuren 5 bis 10 sind Querschnitte unterschiedlicher Ausführungsbeispiele des Halteelements 13 dargestellt, wobei grundsätzlich eine radiale oder axiale Montage der Temperatursensoren 12 in Erwägung gezogen kann. Dabei umfassen die Figuren 5 bis 9 jeweils zwei Abbildungen, die verschiedene Montageschritte darstellen.

Fig. 5 zeigt einen Querschnitt eines Halteelements 13. Erfindungsgemäß ist das Halteelement 13 im Querschnitt U-förmig ausgebildet. Das Halteelement 13 umfasst eine erste und eine zweite Seitenwand 16, 17 sowie einen Boden 15. Die zweite Seitenwand 17 ist elastisch verformbar ausgebildet und weist eine Neigung in Richtung der ersten Seitenwand 16 auf.

An der ersten Seitenwand 16 des Halteelements 13 ist ein Verschaltungssteg 11 angeordnet. Der Verschaltungssteg 11 weist auf der der zweiten Seitenwand 17 zugewandten Seite eine Anlagefläche 14 auf. Zwischen der Anlagefläche 14 und der zweiten Seitenwand 17 ist im montierten Zustand ein Temperatursensor 12 angeordnet. In dem Bereich, in dem im montieren Zustand der Temperatursensor 12 angeordnet ist, weist der Boden 15 einen Abstandshalter 18 auf.

Der Temperatursensor 12 drückt die zweite Seitenwand 17 im montierten Zustand nach außen. D.h. die elastisch verformbar ausgebildete zweite Seitenwand 17 ist im montierten Zustand nicht nach innen geneigt, sondern nimmt eine annähernd rechtwinklige Position ein. Die zweite Seitenwand 17 strebt in die ursprüngliche geneigte Position zurück und übt eine Rückstellkraft auf den Temperatursensor 12 aus.

Die Rückstellkraft, die die elastisch verformbare zweite Seitenwand 17 bereitstellt, bedingt eine gleichmäßige, definierte und reproduzierbare Anpresskraft auf den Temperatursensor.

In Fig. 6 ist ein weiteres Ausführungsbeispiel dargestellt. Das Beispiel entspricht bis auf die Gestaltung der zweiten Seitenwand 17 des Halteelements 13 im Wesentlichen dem in Fig. 5 beschriebenen Beispiel.

Die in Fig. 6 dargestellte zweite Seitenwand 17 weist ein Rückhalteprofil 19 auf. Das Rückhalteprofil 19 ist als auf der Innenfläche der zweiten Seitenwand 17 in Bodenrichtung ausgerichtete Fortsätze ausgebildet. Die Fortsätze schließen mit der Innenfläche der zweiten Seitenwand 17 einen in Richtung des Bodens 15 geöffneten spitzen Winkel ein.

Im eingebauten Zustand liegen die Fortsätze an der zweiten Seitenwand 17 an bzw. sind an diese gedrückt. Die Fortsätze, die das Rückhalteprofil bilden, üben eine Rückstellkraft auf den Temperatursensor 12 aus und pressen diesen gegen die Anlagefläche 14.

Durch das Rückhalteprofil 19 ist einerseits eine vordefinierte Anpresskraft auf den Temperatursensor 12 möglich und andererseits verhindern die in Bodenrichtung gerichteten Fortsätze eine Bewegung des Temperatursensors 12 in Richtung des offenen Endes des U-förmigen Halteelements 13.

Fig. 7 beschreibt ein weiteres Ausführungsbeispiel. Mit Ausnahme der zweiten Seitenwand 17 entspricht der Aufbau des im Folgenden beschriebenen Beispiels im Wesentlichen der in Fig. 5 beschriebenen Ausführung.

Zwischen dem Temperatursensor 12 und der Innenfläche der zweiten Seitenwand 17 ist eine Feder 20 angeordnet. Die Feder 20 ist im Querschnitt V-förmig ausgebildet. Die geschlossene Seite der V-förmigen Feder 20 weist im montierten Zustand in Richtung des Bodens 15. Der dem Temperatursensor 12 zugewandte Schenkel der Feder 20 weist in dem Bereich, der im eingebauten Zustand mit dem Temperatursensor in Kontakt steht, eine Abflachung auf. Der abgeflachte Bereich dient dazu, den Temperatursensor 12 nicht zu beschädigen und mit einer gleichmäßigen, flächigen Anpresskraft zu beaufschlagen.

Durch die Feder 20 ist der Temperatursensor 12 von einer definierten Rückstellkraft beaufschlagt, die den Temperatursensor 12 gegen die Anlagefläche 14 des Verschaltungssteges 12 presst. Für die Aufnahme der Feder 20 zwischen dem Temperatursensor 12 und der zweiten Seitenwand 17 ist es vorteilhaft, wenn das Halteelement 13 im Querschnitt breiter ausgebildet ist als die oben beschriebenen Halteelemente 13.

Die zweite Seitenwand 17 weist an der Innenfläche eine Einkerbung auf. In diese Einkerbung ist im montierten Zustand der nicht abgeflachte Federschenkel eingerastet. Dadurch wird die Feder 20 auf der Position gehalten und gegen ein Verrutschen durch Stöße oder Vibrationen gesichert.

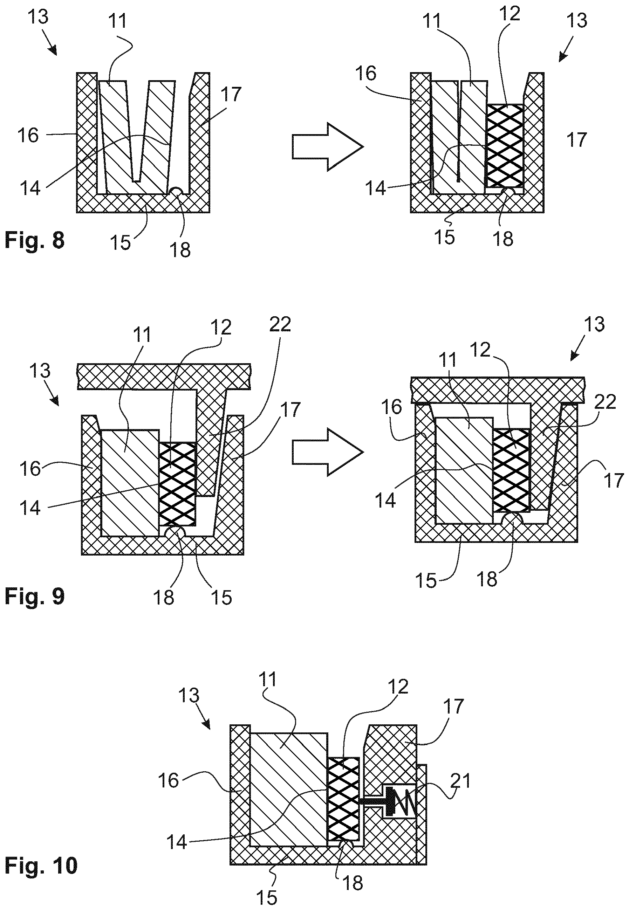

Das in Fig. 8 dargestellte Halteelement 13 entspricht im Wesentlichen dem in Fig. 5 beschriebenen Halteelement 13.

Der in Fig. 8 dargestellte Verschaltungssteg 11 ist wenigstens abschnittsweise V-förmig ausgebildet und elastisch verformbar. Ist der Temperatursensor 12 an der Anlegefläche 14 des Verschaltungsstegs 11 angeordnet, sind die Schenkel des Verschaltungsstegs 11 zusammengedrückt derart, dass die Innenseiten der Schenkel miteinander in Kontakt stehen.

Der Verschaltungssteg 11 bildet ein Federelement und beaufschlagt den Temperatursensor 12 mit einer Rückstellkraft.

Die Veränderung des elektrischen Widerstands fällt in dem Bereich des V-förmigen Verschaltungsstegs 11 im zusammengebauten Zustand gering aus. Die Schenkel des Verschaltungsstegs 11 sind im eingebauten Zustand derart zusammengedrückt, dass der Stromleiterquerschnitt annähernd rechteckig im Wesentlichen dem Leiterquerschnitt der nicht V-förmigen Bereiche des Verschaltungsstegs 11 entspricht.

Der Verschaltungssteg 11 ist abschnittsweise V-förmig ausgebildet und derart dimensioniert, dass der Leiterquerschnitt und/oder der elektrische Widerstand im montierten bzw. im zusammengedrückten Zustand dem Leiterquerschnitt und/oder dem elektrischen Widerstand der nicht V-förmigen Abschnitte des Verschaltungsstegs 11 entspricht.

Der Verschaltungssteg könnte in einer weiteren, nicht dargestellten Ausführungsform auch abschnittsweise geschlitzt und mit einer Aufbauchung versehen sein, so dass der auf diese Weise als Feder ausgestaltete Verschaltungssteg eine nur in horizontaler Richtung wirkende Kraftkomponente aufbringt, um einen Temperatursensor zu verspannen.

Ferner könnte der Verschaltungssteg - gleichermaßen einem Biegebalken - auf Biegung entlang seiner Längsachse 30, vgl. Fig. 3, beansprucht sein, insbesondere durch elastische Verformung bzw. Verkleinerung des Radius eines c-förmigen ausgeschalteten Bogens eines Verschaltungssteges 11, um auf diese Weise eine Verspannung eines Temperatursensors gegen im Haltelelement 13 zu erreichen.Fig. 9 zeigt ein Ausführungsbeispiel mit einer keilförmigen zweiten Seitenwand 17. Ein Anpresskeil 22 ist in dem Bereich zwischen dem Temperatursensor 12 und der zweiten Seitenwand 17 angeordnet. Der Anpresskeil 22 ist auf der Unterseite einer Isolationsscheibe 10 einer weiteren Verschaltungsebene angeordnet.

Der Anpresskeil 22 wirkt mit der keilförmigen zweiten Seitenwand 17 zusammen derart, dass der Temperatursensor 12 und der Verschaltungssteg 11 mit einer Anpresskraft beaufschlagt sind.

Fig. 10 beschreibt ein Halteelement 13 mit einer zweiten Seitenwand 17, in der ein bewegliches Anpresselement 21 integriert ist. Das Anpresselement 21 umfasst ein Federelement mit einem Fortsatz, bspw. einem Stift oder einem Bolzen, der den Temperatursensor 12 mit der Rückstellkraft des Federelements beaufschlagt.

Das integrierte Anpresselement 21 macht einen schnellen Zusammenbau ohne weiterer loser Bauteile möglich. Durch die Rückstellkraft ist der Temperatursensor 12 mit einer gleichmäßigen Flächenpressung an dem Verschaltungssteg 11 angepresst.

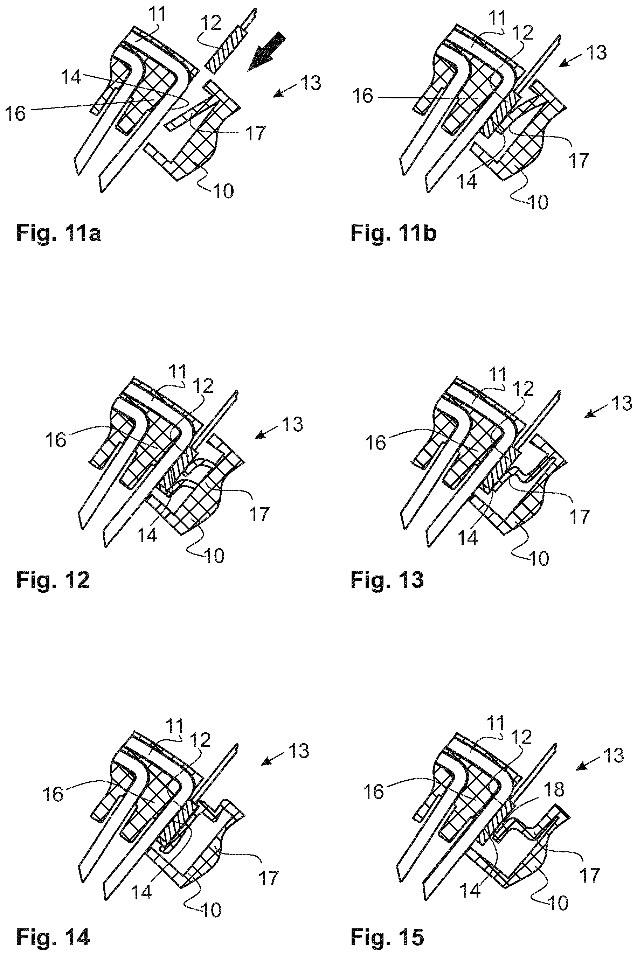

Figuren 11- 16 zeigen weitere Ausführungsbeispiele der Erfindung, die insbesondere für eine radiale Montage des Temperatursensors 12 im Haltelement 13 geeignet sind. Dabei zeigen die Figuren 11 bis 16 jeweils eine Draufsicht. Figuren 11a, 11b zeigen einen Temperatursensor vor bzw. nach Montage. Die Montage wird in radialer Richtung vorgenommen. Das Haltelement 13 weist analog den übrigen Ausführungsbeispielen zwei Seitenwände 16,17 auf. Die Seitenwand 17 ist als federnde Zunge ausgebildet, die als integraler Appendix einer Isolationsscheibe 10 ausgebildet ist. Ein Verschaltungssteg 11 ist mit einer Anlagefläche 14 zwischen diesen Seitenwänden 16, 17 positioniert, wobei die Seitenwand 17 bei Einsetzen des Temperatursensors 12 elastisch verformt wird. Auf die Darstellung des Bodens 15 ist in diesen und nachfolgenden Figuren verzichtet worden.

Figuren 12 bis 16 zeigen weitere Varianten der Erfindung, wobei nur auf die wesentlichen Unterschiede gegenüber Fig. 11 eingegangen wird.

Fig. 12 zeigt eine Ausprägung der Seitenwand 17 mit zwei seitlich hervorstehenden, federnden Zungen. Dadurch kann Temperatursensor mit zwei Anpresskräften beaufschlagt werden. Die Güte der Anpressung steigt dadurch.

Fig. 13 zeigt eine Ausprägung der Seitenwand 17als S-förmige Zunge. Dadurch kann beispielsweise ein Kraft-Weg-Verlauf besser kontrolliert werden bzw. eine Federkennlinie durch die Gestaltung der S-förmigen Zunge vorteilhaft eingestellt werden.

Fig. 14 zeigt eine Ausprägung der Seitenwand 17 mit federndem Fortsatz. Der Fortsatz ist hierbei als Clip ausgebildet mit wenigstens zwei Stopp-Elementen zur Aufnahme des Temperatursensors 12. Bei Montage rastet der Temperartursensor 12 in den Stoppelementen ein, so dass eine Sicherung insbesondere gegen Verschiebung in radialer Richtung gegeben ist.

Fig. 15 zeigt eine Ausprägung der Seitenwand 17 als federnde Zunge mit hier zwei Abstandshaltern 18. Anstelle eines Flächenkontaktes liegen zwischen Temperatursensor 12 und Seitenwand dadurch näherungsweise zwei Linienkontakte zwischen Abstandshaltern 18 und Temperatursensor 12 vor, so dass die Beherrschbarkeit der Anpresskraft steigt.

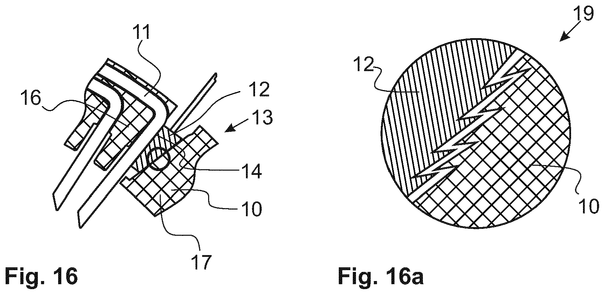

In Fig. 16 sind Seitenwand 17 und Temperatursensor 12 jeweils keilförmig ausgebildet. Eine Anpresskraft kann insbesondere durch Verbiegen des Verschaltugnssteges 11 entlang seiner Längsachse verstärkt werden.

Fig. 16 a zeigt ein Detail aus Fig.16. Dargestellt ist ein Flächenkontakt zwischen Temperatursensor 12 und Seitenwand 17, wobei die Flächen jeweils sägezahnförmig ausgebildet sind. Das bzw. die so ausgebildeten Rückhaltelemente 19 beschränken eine Beweglichkeit des Temperatursensors 12 entgegen seiner Montagerichtung und verhindern, dass der Temperatursensor 12 beispielsweise durch Zug an den Sensorkabeln herausgezogen werden kann und/oder sich durch Vibrationen löst.

Im Allgemeinen ist es denkbar, dass, um eine definierte Flächenpressung zwischen dem Temperatursensor 12 und dem Verschaltungssteg zu erreichen, zwei oder mehr der oben genannten Varianten kombiniert werden.

### Bezugszeichenliste

- 10: Isolationsscheibe
- 11: Verschaltungssteg
- 12: Temperatursensor
- 13: Halteelement
- 14: Anlagefläche
- 15: Boden
- 16: erste Seitenwand
- 17: zweite Seitenwand
- 18: Abstandshalter
- 19: Rückhalteprofil
- 20: Feder
- 21: Anpresselement
- 22: Anpresskeil
- 30: Längsachse (Verschaltungssteg)

## Patentansprüche

1. Stator umfassend wenigstens eine Isolationsscheibe (10), wenigstens einen Verschaltungssteg (11) und wenigstens einen Temperatursensor (12), wobei
- die Isolationsscheibe (10) ein Halteelement (13) und der Verschaltungssteg (11) eine Anlagefläche (14) für den Temperatursensor (12) aufweisen,
- der Verschaltungssteg (11) und der Temperatursensor (12) zumindest abschnittsweise in dem Haltelement (13) angeordnet und gehalten sind und
- der Temperatursensor (12) die Anlagefläche (14) zumindest teilweise flächig berührt und durch eine Federkraft und/oder durch eine Klemmkraft gegen die Anlagefläche (14) gepresst ist, wobei das Halteelement (13) im Querschnitt U-förmig mit einem Boden (15), einer ersten Seitenwand (16) und einer zweiten Seitenwand (17) ausgebildet ist, zwischen denen der Verschaltungssteg (11) und der Temperatursensor (12) angeordnet sind, wobei der Verschaltungssteg (11) direkt oder indirekt an der ersten Seitenwand (16) und der Temperatursensor (12) direkt oder indirekt an der zweiten Seitenwand (17) abgestützt ist.

2. Stator nach Anspruch 1
**dadurch gekennzeichnet, dass**
der Boden (15) und/oder eine Seitenwand (17) einen Abstandshalter (18) für den Temperatursensor (12) aufweist.

3. Stator nach einem der vorhergehenden Ansprüche
**dadurch gekennzeichnet, dass**
die zweite Seitenwand (17) und/oder der Verschaltungssteg (11) elastisch verformbar ist.

4. Stator nach Anspruch 3
**dadurch gekennzeichnet, dass**
der Abstand im Querschnitt des Halteelements (13) zwischen der zweiten Seitenwand (17) und dem Verschaltungssteg (11) vor dem Einbau des Temperatursensors (12) kleiner als die Breite des Temperatursensors (12) ist.

5. Stator nach einem der vorhergehenden Ansprüche
**dadurch gekennzeichnet, dass**
die zweite Seitenwand (17) ein Rückhalteprofil (19) für den Temperatursensor (12) aufweist.

6. Stator nach einem der vorhergehenden Ansprüche
**dadurch gekennzeichnet, dass**
wenigstens eine Feder (20) zwischen der zweiten Seitenwand (17) und dem Temperatursensor (12) angeordnet ist, die den Temperatursensor (12) gegen den Verschaltungssteg (11) presst.

7. Stator nach einem der vorhergehenden Ansprüche
**dadurch gekennzeichnet, dass**
wenigstens ein bewegliches Anpresselement (21) in die zweite Seitenwand (17) integriert ist, das mit einer Kraft in der Richtung des Temperatursensors (12) beaufschlagt ist.

8. Stator nach einem der vorhergehenden Ansprüche
**dadurch gekennzeichnet, dass**
die zweite Seitenwand (17) keilförmig ausgebildet ist.

9. Stator nach Anspruch 8
**dadurch gekennzeichnet, dass**
die zweite Seitenwand (17) direkt am Temperatursensor (12) anliegt.

10. Stator nach Anspruch 8
**dadurch gekennzeichnet, dass**
ein Anpresskeil (22) zwischen der zweiten Seitenwand (17) und dem Temperatursensor (12) angeordnet ist.

11. Elektrische Maschine mit einem Stator nach Anspruch 1.

## Claims

1. Stator comprising at least one insulation disk (10), at least one interconnection web (11), and at least one temperature sensor (12), where
- said insulation disk (10) comprises a holding element (13) and said interconnection web (11) comprises an abutment surface (14) for said temperature sensor (12),
- said interconnection web (11) and said temperature sensor (12) are arranged and held at least in sections in said holding element (13) and
- said temperature sensor (12) touches said abutment surface (14) at least in part in a planar manner and is pressed against said abutment surface (14) by a spring force and/or by a clamping force,
wherein said holding element (13) is U-shaped in cross section with a base (15), a first side wall (16), and a second side wall (17) between which said interconnection web (11) and said temperature sensor (12) are arranged, wherein said interconnection web (11) is supported directly or indirectly on said first side wall (16), and said temperature sensor (12) is supported directly or indirectly on said second side wall (17).

2. Stator according to claim 1, **characterized in that** said base (15) and/or a side wall (17) comprises a spacer (18) for said temperature sensor (12).

3. Stator according to one of the preceding claims, **characterized in that** said second side wall (17) and/or said interconnection web (11) is resiliently deformable.

4. Stator according to claim 3, **characterized in that** the distance in cross section of said holding element (13) between said second side wall (17) and said interconnection web (11) prior to the installation of said temperature sensor (12) is smaller than the width of said temperature sensor (12).

5. Stator according to one of the preceding claims, **characterized in that** said second side wall (17) has a retaining profile (19) for said temperature sensor (12).

6. Stator according to one of the preceding claims, **characterized in that** at least one spring (20) is arranged between said second side wall (17) and said temperature sensor (12) and presses said temperature sensor (12) against said interconnection web (11).

7. Stator according to one of the preceding claims, **characterized in that** at least one movable pressing element (21) is integrated into said second side wall (17) and is acted upon by a force in the direction of said temperature sensor (12).

8. Stator according to one of the preceding claims, **characterized in that** said second side wall (17) is formed to be wedge-shaped.

9. Stator according to claim 8, **characterized in that** said second side wall (17) abuts directly against said temperature sensor (12).

10. Stator according to claim 8, **characterized in that** a pressing wedge (22) is arranged between said second side wall (17) and said temperature sensor (12).

11. Electric machine with a stator according to claim 1.

## Revendications

1. Stator comprenant au moins un disque isolant (10), au moins une nervure de câblage (11) et au moins un capteur de température (12), dans lequel
- le disque isolant (10) présente un élément de retenue (13) et la nervure de câblage (11) une surface d'appui (14) pour le capteur de température (12),
- la nervure de câblage (11) et le capteur de température (12) sont agencés et retenus au moins par sections dans l'élément de retenue (13), et
- le capteur de température (12) est en contact au moins partiellement de manière plane avec la surface d'appui (14) et est pressé contre la surface d'appui (14) par une force de ressort et/ou par une force de serrage,
dans lequel l'élément de retenue (13) est réalisé en section transversale en forme de U avec un fond (15), une première paroi latérale (16) et une seconde paroi latérale (17), entre lesquelles sont disposées la nervure de câblage (11) et le capteur de température (12), dans lequel la nervure de câblage (11) est supportée directement ou indirectement sur la première paroi latérale (16) et le capteur de température (12) est supporté directement ou indirectement sur la seconde paroi latérale (17).

2. Stator selon la revendication 1,
**caractérisé en ce que**
le fond (15) et/ou une paroi latérale (17) présente un élément d'espacement (18) pour le capteur de température (12).

3. Stator selon l'une quelconque des revendications précédentes,
**caractérisé en ce que**
la seconde paroi latérale (17) et/ou la nervure de câblage (11) sont déformables élastiquement.

4. Stator selon la revendication 3,
**caractérisé en ce que**
la distance dans la section transversale de l'élément de retenue (13) entre la seconde paroi latérale (17) et la nervure de câblage (11) avant l'installation du capteur de température (12) est inférieure à la largeur du capteur de température (12).

5. Stator selon l'une quelconque des revendications précédentes,
**caractérisé en ce que**
la seconde paroi latérale (17) présente un profil de soutien (19) pour le capteur de température (12).

6. Stator selon l'une quelconque des revendications précédentes,
**caractérisé en ce que**
au moins un ressort (20) est agencé entre la seconde paroi latérale (17) et le capteur de température (12), qui presse le capteur de température (12) contre la nervure de câblage (11).

7. Stator selon l'une quelconque des revendications précédentes,
**caractérisé en ce que**
au moins un élément de pressage mobile (21) est intégré dans la seconde paroi latérale (17), qui est soumis à une force dans la direction du capteur de température (12).

8. Stator selon l'une quelconque des revendications précédentes,
**caractérisé en ce que**
la seconde paroi latérale (17) est réalisée en forme de coin.

9. Stator selon la revendication 8,
**caractérisé en ce que**
la seconde paroi latérale (17) repose directement sur le capteur de température (12).

10. Stator selon la revendication 8,
**caractérisé en ce que**
un coin de pressage (22) est agencé entre la seconde paroi latérale (17) et le capteur de température (12).

11. Machine électrique comprenant un stator selon la revendication 1.
